# EUROPÄISCHE PATENTSCHRIFT

(11) **EP 2 694 176 B1**
(45) Veröffentlichungstag und Bekanntmachung des Hinweises auf die Patenterteilung: **22.07.2015**
(21) Anmeldenummer: 12724344.2
(22) Anmeldetag: 31.05.2012
(51) Int. Cl.: C02F 1/20, C02F 1/00, C08J 11/02, C02F 103/38, B01D 3/00, C02F 1/04, C08F 6/00

(54) **VERFAHREN ZUR AUFBEREITUNG VON ABWÄSSERN UND ABGASKONDENSATEN AUS DER POLYMERISATION VON VINYLACETAT UND ETHYLEN IN WÄSSRIGEM MEDIUM**
METHOD FOR PROCESSING WASTEWATER AND EXHAUST GAS CONDENSATES FROM THE POLYMERIZATION OF VINYL ACETATE AND ETHYLENE IN AN AQUEOUS MEDIUM
PROCÉDÉ DE TRAITEMENT DES EAUX USÉES ET DES CONDENSATS DE GAZ D'ÉCHAPPEMENT ISSUS DE LA POLYMÉRISATION DE L'ACÉTATE DE VINYLE ET DE L'ÉTHYLÈNE EN MILIEU AQUEUX

(30) Priorität: 06.06.2011 DE 102011077010
(43) Veröffentlichungstag der Anmeldung: 12.02.2014
(73) Patentinhaber: Wacker Chemie AG, 81737 München (DE)
(72) Erfinder: GUENALTAY, Mehmet, 84547 Emmerting (DE); WEITZEL, Hans-Peter, 84571 Reischach (DE); ECKL, Bernhard, 84489 Burghausen (DE)
(74) Vertreter: Schuderer, Michael
(86) Internationale Anmeldenummer: PCT/EP2012/060288
(87) Internationale Veröffentlichungsnummer: WO 2012/168138

(56) Entgegenhaltungen:
- DE-A1-102005 061 576
- DE-C2- 4 425 918
- US-A- 3 359 187
- US-A- 3 509 115
- US-A- 5 208 367

## Beschreibung

Die Erfindung betrifft ein Verfahren zur Aufbereitung von Abwässern und Abgaskondensaten aus der Polymerisation von Vinylacetat und Ethylen in wässrigem Medium unter Rückgewinnung von nicht polymerisierten Restmonomeren.

Wässrige Polymerdispersionen bzw. wässrige Polymerlatices auf der Basis von Vinylacetat und Ethylen werden in bekannter Weise nach dem Suspensionspolymerisationsverfahren, insbesondere nach dem Emulsionspolymerisationsverfahren, hergestellt. Aus wirtschaftlichen Gründen wird bei deren Herstellung die Polymerisation nicht bis zu vollständigem Umsatz durchgeführt. Es verbleiben Restmonomeranteile, welche mittels chemischer Verfahren wie Nachpolymerisation und/oder mittels physikalischer Verfahren wie Strippverfahren, bei denen ein Strippgas durch die wässrige Dispersion geleitet wird, entfernt werden. Aus ökologischen und wirtschaftlichen Gründen ist es angezeigt, die dabei entstehenden Abgase und Abwässer zu reinigen und den beim Entgasen und gegebenenfalls Strippen ausgeschleusten Monomeranteil, insbesondere den Vinylacetat-Anteil, zurückzugewinnen und gegebenenfalls bei der Polymerisation wiederzuverwerten.

Aus der DE 4425918 C2 ist ein Verfahren zur Rückgewinnung von nicht umgesetztem Vinylacetat-Monomer (VAM) nach Polymerisationsreaktionen aus dem beim Strippen entweichenden Wasserdampf bekannt, bei dem das Vinylacetat aus dem Prozesswasser einer Wasserringpumpe, welche die Gasphase beim Strippen der Dispersion abzieht, mittels Extraktion in einer Extraktionskolonne isoliert wird. Mit diesem Verfahren wird zwar VAM aus dem beim Strippen entweichenden Wasserdampf zurückgewonnen, der an der Wasserringpumpe abgenommene Gasstrom sowie die an der Extraktionskolonne anfallenden Abwässer enthalten aber noch Restmengen an VAM.

Die WO 2007/074075 A1 beschreibt die Entfernung von Vinylester- und Ethylen-Restmonomer nach Abschluss der Polymerisation mittels einer mehrstufigen, fraktionierten Tiefkaltkondensation. Die Aufreinigung von bei der Polymerisation anfallenden Abwässern wird nicht beschrieben.

Das US-Patent 5,208,367 beschreibt die Abtrennung von Vinylacetat aus einem Gemisch von hochsiedenden Lösungsmitteln wie Isooctan, Paraffin und Schweröl mittels eines Extraktionsprozesses.

Das US-Patent 3,905,875 beschreibt ein Verfahren zur Aufarbeitung eines Produktgasstromes aus der Gasphasenoxidation von Ethylen, Essigsäure und Sauerstoff zu Vinylacetatmonomer. Dabei wird das Zielprodukt Vinylacetat und nicht umgesetzte Essigsäure und das Nebenprodukt Ethylacetat aus dem Produktgemisch jeweils destillativ abgetrennt.

Es bestand daher die Aufgabe, ein Verfahren zu entwickeln, mit dem sich die bei der Polymerisation von Vinylacetat und Ethylen anfallenden Abwässer und Abgaskondensate reinigen lassen und der darin enthaltene Restmonomeranteil zumindest teilweise zurückgewinnen lässt.

Gegenstand der Erfindung ist eine Verfahren zur Aufbereitung von Abwässern und Abgaskondensaten aus der Polymerisation von Vinylacetat und Ethylen und gegebenenfalls weiteren Comonomeren in wässrigem Medium, nach dem Suspensions- oder Emulsionspolymerisationsverfahren bei einem Druck von 5 bis 100 bar abs., wobei nach Abschluss der Polymerisation der Polymerisationsansatz auf einen Druck von 0,1 bis 5 bar abs. entspannt wird, und gegebenenfalls mit inerten Schleppgasen behandelt wird (Strippen) und die Polymerdispersion abgelassen wird, dadurch gekennzeichnet, dass
A) während der Entspannung die gasförmige Phase mittels eines Verdichters abgezogen wird,
B) gegebenenfalls die beim Strippen anfallende gasförmige Phase mittels des Verdichters abgezogen wird und vor Eintritt in den Verdichter mittels eines oder mehrerer Wärmetauscher abgekühlt wird, und
C) die im Verdichter und gegebenenfalls im Wärmetauscher anfallenden flüssigen Phasen jeweils von der gasförmigen Phase abgetrennt werden, und
D)einer Rektifikationskolonne aufgegeben werden, und in eine Vinylacetatmonomer-Phase und eine Abwasserphase aufgetrennt werden, und die Vinylacetatmonomer-Phase wieder der Polymerisation zugeführt wird.

Vinylacetat wird im Allgemeinen in einer Menge von 30 bis 97 Gew.-%, vorzugsweise 70 bis 95 Gew.-%, jeweils bezogen auf das Gesamtgewicht der Monomere, copolymerisiert.

Ethylen wird im Allgemeinen in einer Menge von 1 bis 30 Gew.-%, vorzugsweise 3 bis 15 Gew.-%, jeweils bezogen auf das Gesamtgewicht der Monomere, copolymerisiert.

Geeignete weitere Comonomeren sind solche aus der Gruppe der Vinylester von Carbonsäuren mit 1 bis 12 C-Atomen ausgenommen Vinylacetat, der Ester der Acrylsäure oder Methacrylsäure mit unverzweigten oder verzweigten Alkoholen mit 1 bis 15 C-Atomen, der Vinylhalogenide wie Vinylchlorid, der Olefine, ausgenommen Ethylen, wie Propylen. Bevorzugte Vinylester sind Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 9 bis 11 C-Atomen, beispielsweise VeoVa9^{R} oder VeoVa10^{R} (Handelsnamen der Firma Momentive). Bevorzugte Methacrylsäureester oder Acrylsäureester sind Methylacrylat, Methylmethacrylat, Ethylacrylat, n-Butylacrylat, 2-Ethylhexylacrylat. Diese Comonomere werden gegebenenfalls in einer Menge von 1 bis 40 Gew.-%, bezogen auf das Gesamtgewicht der Monomere, copolymerisiert.

Gegebenenfalls können noch 0,05 bis 10 Gew.-%, bezogen auf das Gesamtgewicht der Monomere, Hilfsmonomere copolymerisiert werden. Beispiele für Hilfsmonomere sind ethylenisch ungesättigte Mono- und Dicarbonsäuren, vorzugsweise Acrylsäure, Methacrylsäure, Fumarsäure und Maleinsäure; ethylenisch ungesättigte Carbonsäureamide und -nitrile, vorzugsweise Acrylamid und Acrylnitril; Mono- und Diester der Fumarsäure und Maleinsäure wie die Diethyl- und Diisopropylester, sowie Maleinsäureanhydrid, ethylenisch ungesättigte Sulfonsäuren bzw. deren Salze, vorzugsweise Vinylsulfonsäure, 2-Acrylamido-2-methylpropansulfonsäure. Weitere Beispiele sind vorvernetzende Comonomere wie mehrfach ethylenisch ungesättigte Comonomere, beispielsweise Divinyladipat, Diallylmaleat, Allylmethacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid (NMMA), N-Methylolallylcarbamat, Alkylether wie der Isobutoxyether oder Ester des N-Methylolacrylamids, des N-Methylolmethacrylamids und des N-Methylolallylcarbamats. Geeignet sind auch epoxidfunktionelle Comonomere wie Glycidylmethacrylat und Glycidylacrylat. Weitere Beispiele sind siliciumfunktionelle Comonomere, wie Acryloxypropyltri(alkoxy)- und Methacryloxypropyltri(alkoxy)-Silane, Vinyltrialkoxysilane und Vinylmethyldialkoxysilane, wobei als Alkoxygruppen beispielsweise Methoxy-, Ethoxy- und Ethoxypropylenglykolether-Reste enthalten sein können. Genannt seien auch Monomere mit Hydroxy- oder CO-Gruppen, beispielsweise Methacrylsäure- und Acrylsäurehydroxyalkylester wie Hydroxyethyl-, Hydroxypropyl- oder Hydroxybutylacrylat oder - methacrylat sowie Verbindungen wie Diacetonacrylamid und Acetylacetoxyethylacrylat oder -methacrylat.

Die Herstellung erfolgt nach dem Emulsionspolymerisationsverfahren oder nach dem Suspensionspolymerisationsverfahren, vorzugsweise nach dem Emulsionspolymerisationsverfahren, wobei die Polymerisationstemperatur im Allgemeinen 40°C bis 100°C, vorzugsweise 60°C bis 90°C beträgt und wobei bei einem Druck von im Allgemeinen 5 bis 100 bar abs. gearbeitet wird. Die Initiierung der Polymerisation erfolgt mit den für die Emulsionspolymerisation bzw. Suspensionspolymerisation gebräuchlichen wasserlöslichen bzw. monomerlöslichen Initiatoren oder Redox-Initiator-Kombinationen. Beispiele für wasserlösliche Initiatoren sind die Natrium-, Kalium- und Ammoniumsalze der Peroxodischwefelsäure, Wasserstoffperoxid, t-Butylperoxid, t-Butylhydroperoxid, Kaliumperoxodiphosphat, tert.-Butylperoxopivalat, Cumolhydroperoxid, Isopropylbenzolmonohydroperoxid, Azobisisobutyronitril. Beispiele für monomerlösliche Initiatoren sind Dicetylperoxydicarbonat, Dicyclohexylperoxydicarbonat, Dibenzoylperoxid. Die genannten Initiatoren werden im Allgemeinen in einer Menge von 0.01 bis 0.5 Gew.-%, bezogen auf das Gesamtgewicht der Monomere, eingesetzt.

Als Redox-Initiatoren verwendet man Kombinationen aus den genannten Initiatoren in Kombination mit Reduktionsmitteln. Geeignete Reduktionsmittel sind die Sulfite und Bisulfite der Alkalimetalle und von Ammonium, beispielsweise Natriumsulfit, die Derivate der Sulfoxylsäure wie Zink- oder Alkaliformaldehydsulfoxylate, beispielsweise Natriumhydroxymethansulfinat, und (Iso-)Ascorbinsäure. Die Reduktionsmittelmenge beträgt vorzugsweise 0,01 bis 0,5 Gew.-%, bezogen auf das Gesamtgewicht der Monomere.

Zur Steuerung des Molekulargewichts können während der Polymerisation regelnde Substanzen eingesetzt werden. Falls Regler eingesetzt werden, werden diese üblicherweise in Mengen zwischen 0,01 bis 5,0 Gew.-%, bezogen auf die zu polymerisierenden Monomeren, eingesetzt und separat oder auch vorgemischt mit weiteren Reaktionskomponenten dosiert. Beispiele solcher Substanzen sind n-Dodecylmercaptan, tert.-Dodecylmercaptan, Mercaptopropionsäure, Mercaptopropionsäuremethylester, Isopropanol und Acetaldehyd. Vorzugsweise werden keine regelnden Substanzen verwendet.

Geeignete Schutzkolloide sind teilverseifte Polyvinylalkohole; Polyvinylpyrrolidone; Polysaccharide in wasserlöslicher Form wie Stärken (Amylose und Amylopectin), Cellulosen und deren Carboxymethyl-, Methyl-, Hydroxyethyl-, Hydroxypropyl-Derivate; Proteine wie Casein oder Caseinat, Sojaprotein, Gelatine; Ligninsulfonate; synthetische Polymere wie Poly(meth)acrylsäure, Copolymerisate von (Meth)acrylaten mit carboxylfunktionellen Comonomereinheiten, Poly(meth)acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere.

Bevorzugt werden teilverseifte oder vollverseifte Polyvinylalkohole. Besonders bevorzugt sind teilverseifte Polyvinylalkohole mit einem Hydrolysegrad von 80 bis 95 Mol% und einer Höpplerviskosität in 4 %-iger wässriger Lösung von 1 bis 30 mPas (Methode nach Höppler bei 20°C, DIN 53015). Die Polyvinylalkohole werden im Allgemeinen in einer Menge von insgesamt 1 bis 20 Gew.-%, bezogen auf das Gesamtgewicht der Monomere, bei der Polymerisation zugesetzt.

Bei dem erfindungsgemäßen Verfahren kann auch in Gegenwart von Emulgatoren polymerisiert werden, wobei die Mengen an Emulgator im Allgemeinen 1 bis 5 Gew.-%, bezogen auf die Monomermenge, betragen. Geeignete Emulgatoren sind sowohl anionische, kationische als auch nichtionische Emulgatoren, beispielsweise anionische Tenside, wie Alkylsulfate mit einer Kettenlänge von 8 bis 18 C-Atomen, Alkyl- oder Alkylarylethersulfate mit 8 bis 18 C-Atomen im hydrophoben Rest und bis zu 40 Ethylen- oder Propylenoxideinheiten, Alkyl- oder Alkylarylsulfonate mit 8 bis 18 C-Atomen, Ester und Halbester der Sulfobernsteinsäure mit einwertigen Alkoholen oder Alkylphenolen, oder nichtionische Tenside wie Alkylpolyglykolether oder Alkylarylpolyglykolether mit 8 bis 40 Ethylenoxid-Einheiten.

Die Polymerisation kann in einem Batchverfahren, Semibatchverfahren oder in einem kontinuierlichen Verfahren durchgeführt werden. Die Monomere können dabei insgesamt vorgelegt werden, insgesamt zudosiert werden oder in Anteilen vorgelegt werden und der Rest nach der Initiierung der Polymerisation zudosiert werden. Die Dosierungen können separat (räumlich und zeitlich) durchgeführt werden oder die zu dosierenden Komponenten können alle oder teilweise voremulgiert dosiert werden.

Die Polymerisation wird im Allgemeinen bis zu einem Umsatz von ≥ 95 Gew.-%, vorzugsweise bis zu einem Umsatz von 95 bis 99 Gew.-%, der unter Polymerisationsbedingungen flüssigen Monomere geführt. Anschließend wird das Polymerisationsgemisch auf einen Druck von 0,1 bis 5,0 bar abs., vorzugsweise 0,1 bis 1,0 bar abs., entspannt. Im Allgemeinen wird dazu das Polymerisationsgemisch aus dem Polymerisationsreaktor 1 in einen unter entsprechendem Druck stehenden Reaktor 2 (Entspannungsbehälter) überführt. Bei diskontinuierlichen Betrieb (Batch- oder Semibatch-Fahrweise) erfolgt die Entspannung nach abgeschlossener Polymerisation. Bei kontinuierlicher Polymerisation wird das Polymerisationsgemisch kontinuierlich in den Entspannungsbehälter 2 überführt.

Der Transport erfolgt aufgrund der Druckdifferenz zwischen Polymerisationsreaktor 1 und Entspannungsbehälter 2. Die Druckdifferenz beträgt vorzugsweise von 0,5 bis 5 bar. Wenn während der Reaktorentleerung die Druckdifferenz soweit abnimmt, dass die Entleerungsgeschwindigkeit die Grenze der Wirtschaftlichkeit des Prozesses unterschreitet, kann durch Einleiten von Inertgas, beispielsweise Nachdrücken mit Stickstoff, der Vordruck im Polymerisationsreaktor 1 konstant gehalten bzw. erhöht werden.

Im Entspannungsbehälter 2 kann gegebenenfalls in Anwendung bekannter Methoden nachpolymerisiert werden, beispielsweise durch mit Redoxkatalysator initiierter Nachpolymerisation.

Der flüchtige Restmonomeranteil wird gegebenenfalls anschließend mittels Überleiten oder vorzugsweise Durchleiten von inerten Schleppgasen wie Luft, Stickstoff oder vorzugsweise Wasserdampf über/durch das wässrige Polymerisationsgemisch in dem Fachmann bekannter Weise entfernt (Strippen). Im Allgemeinen wird das Strippen bei dem absoluten Druck im Entspannungsbehälter 2 durchgeführt, der bei der im Entspannungsbehälter 2 vorliegenden Temperatur des Polymerisationsgemisches dem Siedepunkt des Wassers entspricht. Vorzugsweise wird bei einer Temperatur von 50 bis 80°C und einem Druck von 0,1 bis 0,5 bar abs. gestrippt.

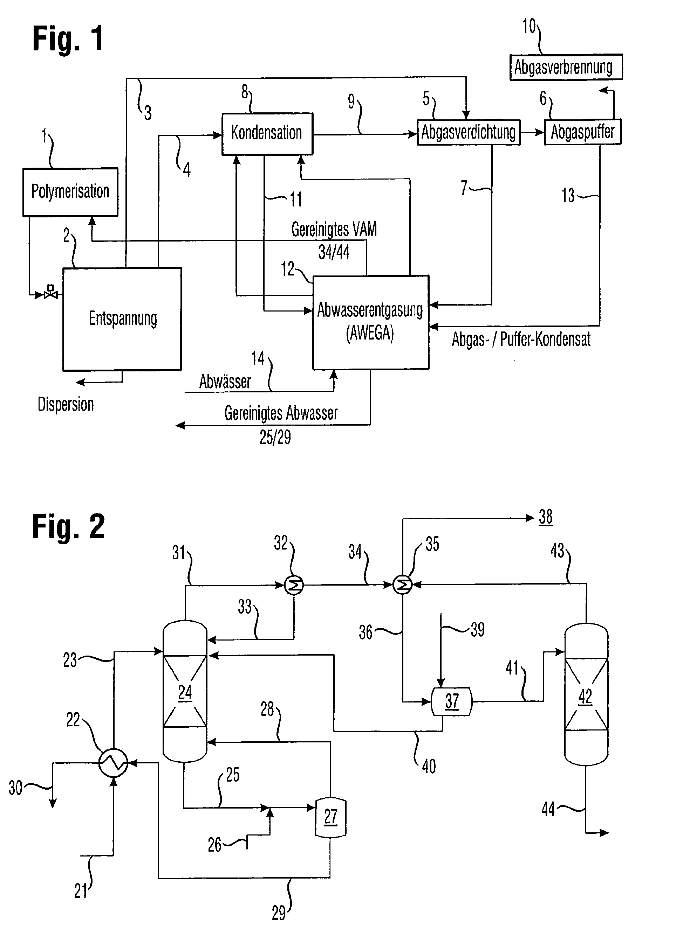

Das erfindungsgemäße Verfahren wird in Figur 1 näher erläutert:
Bei der Entspannung des Polymerisationsansatzes kommt es zur Phasentrennung zwischen der Polymerdispersion (flüssige Phase) und einer gasförmigen Phase, welche Inertgas, bei der Polymerisation nicht vollständig umgesetzte Monomere (vor allem Vinylacetat und Ethylen) sowie Nebenprodukte aus der Polymerisation (beispielsweise Acetaldehyd, Ethylacetat, t-Butanol) enthält. Die bei der Entspannung anfallende gasförmige Phase 3 wird über einen Verdichter 5 abgezogen.

Die beim optionalen Strippen anfallende gasförmige Phase 4 enthält im Allgemeinen Wasserdampf und den bei der Reaktion nicht umgesetzten Anteil an Monomer, insbesondere Vinylacetatmonomer und Ethylen, sowie bei der Polymerisation anfallende Nebenprodukte wie Acetaldehyd oder Ethylacetat, und wird auch über den Verdichter 5 abgezogen. Vor Eintritt in den Verdichter 5 wird die gasförmige Phase 4 aus dem Strippprozess einem oder mehreren hintereinandergeschalteten Wärmetauschern (Kondensator) 8 zugeführt. Die gasförmige Phase wird auf eine Temperatur abgekühlt, bei der die Vinylestermonomere und Wasser sowie gegebenenfalls Ethylacetat, Acetaldehyd und t-Butanol kondensieren, und im Wesentlichen nur noch Ethylen und Inertgasanteile in der Gasphase verbleiben. Vorzugsweise wird durch Wärmetausch auf eine Temperatur von 5 bis 25°C, besonders bevorzugt 5 bis 20°C, jeweils bei dem bevorzugten Druckniveau von 0,1 bis 1,0 bar abs., abgekühlt.

Bei dem Verdichter 5 handelt es sich vorzugsweise um einen Flüssigkeitsring-Verdichter, besonders bevorzugt einen mit Wasser betriebenen Flüssigkeitsring-Verdichter (Wasserringpumpe). Es können gegebenenfalls auch mehrere Verdichter eingesetzt werden, welche dann vorzugsweise parallel geschaltet sind. Im Verdichter 5 werden der Gasstrom 3, die bei der Entspannung abgezogene Gasphase, und gegebenenfalls der Gasstrom 9, die aus dem Strippprozess resultierenden nichtkondensierbaren Gase, auf ein Druckniveau von vorzugsweise 1,1 bis 1,5 bar abs. verdichtet und, vorzugsweise über einen AbgaspufferBehälter 6, entweder zur Rückgewinnung des Ethylenanteils aufgearbeitet, oder zur Abgasverbrennung 10 geführt.

Das bei der Kühlung in der Wärmetauscher-Einheit 8 erhaltene Kondensat 11, im Allgemeinen eine Mischung aus Wasser und organischen Stoffen (im Allgemeinen Vinylacetat, Ethylacetat, Acetaldehyd, t-Butanol), wird einer Abwasserentgasungsanlage (AWEGA) 12, welche als wesentlichen Bestandteil eine Rektifikationskolonne 24 umfasst, zugeführt.

Die nach der Verdichtung im Verdichter 5 aus der Gasphase auskondensierenden Kondensate 7 werden ebenfalls der AWEGA 12 zugeführt In einer bevorzugten Ausführungsform werden die bei der Verdichtung anfallende Kondensate zwischen Verdichter 5 und Abgaspuffer 6 entnommen und der Abwasserreinigungs-Einheit 12 zugeführt. Im Abgaspuffer 6 anfallende Kondensate 13 werden vorzugsweise ebenfalls der Abwasserentgasungsanlage 12 zugeführt. Vorzugsweise werden auch die beim Betrieb des Verdichters 5 anfallenden Abwässer sowie gegebenenfalls weitere Abwässer 14 aus der Polymerisation, beispielsweise Abwasser aus der Reaktorspülung, der Abwasserentgasungsanlage 12 zugeführt. Dort werden sie der Rektifikationskolonne 24 aufgegeben.

In der Abwasserentgasungsanlage AWEGA 12 werden die gesammelten Kondensate und Abwässer 21 in der Rektifikationskolonne 24 in eine weitgehend von organischen Verunreinigungen befreite flüssige Phase 30 (gereinigtes Abwasser) und eine überwiegend Vinylacetat enthaltende Destillat-Phase 34 aufgetrennt. Das Vinylacetatmonomer 34 wird vorzugsweise in die Polymerisation zurückgeführt. Das gereinigte Abwasser 30 kann ohne weitere Aufbereitung entsorgt werden.

Die Abwasserentgasungsanlage AWEGA 12 und bevorzugte Ausführungsformen zur Reinigung des Abwassers werden in Figur 2 näher erläutert:
Die gesammelten Abwässer 21 werden zur Rückgewinnung des Vinylacetatmonomeranteils auf den Kopf der Rektifikationskolonne 24 eingespeist, welche vorzugsweise bei einem Druck von 0,2 bis 0,5 bar abs. und bei einer Temperatur von 40 bis 60°C betrieben wird. Vorzugsweise wird das bei einer Temperatur von im Allgemeinen 20 bis 30°C vorliegende Abwasser 21 auf eine Temperatur von vorzugsweise 50 bis 60°C vorgewärmt und das vorgewärmte Kondensat 23 der Rektifikationskolonne 24 aufgegeben. Dies kann mittels indirekten Wärmetauschs in einem Wärmetauscher 22 erfolgen, wobei als Wärmeträger Wasserdampf, Wärmeträgeröl, und vorzugsweise das nach der Rückgewinnung des Vinylacetatmonomeranteils anfallende, gereinigte Abwasser 29, dienen kann.

Am Kopf der Rektifikationskolonne 24 wird ein dampfförmiger Strom 31 abgezogen und in einem Kondensator 32 auf eine Temperatur abgekühlt, bei der der Wasseranteil kondensiert, vorzugsweise auf eine Temperatur von 30 bis 40°C bei einem Druck von vorzugsweise 0,2 bis 0,4 bar abs.. Das dabei anfallende, mit Wasser angereicherte Kondensat 33 wird als Rückfluss wieder dem Kopf der Rektifikationskolonne 24 aufgegeben.

Der gasförmige Anteil 34 mit bis zu 98 Gew.-%, vorzugsweise 85 bis 95 Gew.-% Vinylacetat, im Allgemeinen 1 bis 14 Gew.-% Wasserdampf, im Allgemeinen 0,5 bis 1 Gew.-% Acetaldehyd kann, zur Wiederverwertung des Vinylacetatanteils in der Polymerisation, nach einer vorzugsweise vollständigen Kondensation im Wärmetauscher 35 in flüssiger Form wieder der Polymerisation zugeführt werden, oder zur Verbrennung geführt werden, oder in der am meisten bevorzugten Ausführungsform weiter gereinigt werden.

Das Sumpfprodukt 25 der Rektifikationskolonne ist das gereinigte Abwasser mit einer Reinheit von vorzugsweise ≥ 99,0 Gew.-% Wasser, besonders bevorzugt ≥ 99,5 Gew.-% Wasser.

In einer bevorzugten Ausführungsform kann das Sumpfprodukt (Abwasser) 25 weiter gereinigt werden. In einer weiteren bevorzugten Ausführungsform kann das Vinylacetatmonomer 34 weiter gereinigt werden.

Zur weiteren Reinigung des Abwassers wird das Sumpfprodukt 25 einem Verdampfer 27 zugeführt. In dem Verdampfer 27 wird dabei, vorzugsweise durch Beheizung 26 (direkte oder indirekte Beheizung mit Wasserdampf), der für den Gegenstrom in der Rektifikationskolonne 24 einsetzbare Dampfstrom 28 mittels Teilverdampfung des Sumpfproduktes 25 erzeugt. Bei der Teilverdampfung werden im Allgemeinen 0,5 bis 10 Gew.-%, vorzugsweise 1 bis 5 Gew.-%, bezogen auf das Sumpfprodukt 25, verdampft. Der nach Teilverdampfung verbleibende Abwasserstrom 29 ist dadurch zusätzlich von Restmonomeren befreit. Gegebenenfalls nach Wärmetausch im Wärmetauscher 22 (zur Vorwärmung des Abwasserstroms 21) kann dem Prozess gereinigtes Abwasser 29/30 mit einer Reinheit von vorzugsweise ≥ 99,9 Gew.-% Wasser, besonders bevorzugt ≥ 99,95 Gew.-% Wasser, entnommen werden.

In einer weiteren bevorzugten Ausführungsform kann das Kopfprodukt 31 (Vinylacetatmonomer) der Rektifikationskolonne 24 weiter gereinigt werden. Dazu wird dieses kondensiert und in einer weiteren Rektifikationskolonne 42 aufgereinigt. Das Leicht- und Mittelsieder, insbesondere Vinylacetat, enthaltende Kopfprodukt 31 wird vorzugsweise über einen Kondensator 32 ausgeschleust und vorzugsweise in einem Wärmetauscher 35 abgekühlt, vorzugsweise auf eine Temperatur von 10 bis 20°C bei einem Druck von vorzugsweise 0,2 bis 0,5 bar abs.. Das dabei anfallende Kondensat 36 wird einem Flüssig-Phasenabscheider 37 zugeführt. Die nicht kondensierbaren, gasförmigen Anteile 38 werden vorzugsweise zur Abgasverbrennung geführt.

In den Flüssigphasenabscheider 37 können gegebenenfalls auch Kondensate und Abwässer aus anderen Anlageteilen geführt werden (Kondensat/Abwasserstrom 39), wie die beim Betrieb eines mit Wasser betriebenen Flüssigkeitsringverdichters 5 anfallenden Abwässer, das Kondensat aus dem Abgaspufferbehälter 6 oder in den Rohrleitungen der Anlage anfallende Kondensate. Die genannten Abwässer des Abwasserstroms 39 enthalten im Allgemeinen einen überwiegenden Anteil an organischen Bestandteilen wie Restmonomer oder Nebenprodukte der Polymerisation und nur 1 bis 15 Gew.-% Wasser. Im Flüssigphasen-Abscheider 37 wird in eine wässrige Phase 40 aufgeteilt, welche vorzugsweise auf den Kopf der Rektifikationskolonne 24 zurückgeführt wird, und eine Vinylacetatmonomer-Phase 41.

Die Vinylacetatmonomer-Phase 41 kann ohne weitere Behandlung in die Polymerisation zurückgeführt werden oder vor deren Rückführung zur Polymerisation in einer weiteren Rektifikationskolonne 42 von niedriger siedenden organischen Nebenprodukten 43, beispielsweise Acetaldehyd, befreit werden. Vorzugsweise wird die Rektifikationskolonne 42 bei einem Druck von 0,2 bis 0,5 bar abs. und bei einer Temperatur von 30 bis 40°C betrieben. Die dampfförmige organische Phase 43 wird am Kopf der Kolonne 42 entnommen, im Wärmetauscher 35 abgekühlt und die nicht kondensierbaren, gasförmigen Anteile 38 werden zur Abgasverbrennung geführt. Das gereinigte Vinylacetatmonomer 44 wird aus dem Kolonnensumpf entnommen.

Mit dem erfindungsgemäßen Verfahren können die Abwässer aus einer Polymerisation von Vinylacetat und Ethylen, welche ungereinigt 1,5 bis 2,0 % Vinylacetat-Monomer enthalten, auf einen Reinheitsgrad von vorzugsweise ≥ 99,9 Gew.-% Wasser gebracht werden, wobei der VAM-Anteil vorzugsweise nur noch 200 bis 300 ppm beträgt.

Das Vinylacetat-Monomer (VAM) 34 wird am Kopf der Rektifikationskolonne 24 und nach Auskondensation des Wasseranteils im Kondensator 32 mit einem Reinheitsgrad von vorzugsweise ≥ 85 % VAM erhalten.

In der bevorzugten Ausführungsform kann mittels einer zweiten Rektifikationskolonne 42 das Vinylacetat-Monomer 44 auf einen Reinheitsgrad von vorzugsweise ≥ 99 % VAM gebracht werden.

Die nachfolgenden Beispiele dienen der weiteren Erläuterung der Erfindung:

### Beispiel 1:

In einer großtechnischen Anlage zur Produktion von wässrigen Vinylacetat-Ethylen-Copolymer-Dispersionen fielen bei einer Kapazität von 100000 to Polymerdispersion pro Jahr im selben Zeitraum etwa 40000 m³ Abwasser an (0,4 m³ Abwasser pro Tonne Dispersion). Dieses Abwasser hatte im Mittel folgende Zusammensetzung:
1,5 Gew.-% Vinylacetat, 400 Gew.-ppm Acetaldehyd, 20 Gew.-ppm t-Butanol und 10 Gew.-ppm Ethylacetat.

Dieses Abwasser war vor allem zusammengesetzt aus den Anteilen, welche bei der Entspannung im mit Wasser betriebenen Flüssigkeitsringverdichter 5 als Kondensate angefallen waren (Strom 7)und aus den Anteilen, welche nach dem Strippen und Abkühlen in der Wärmetauschereinheit 8 angefallen waren (Strom 11) .

Das Abwasser wurde mittels Sattdampfeinspritzung auf 55°C aufgeheizt und einer Rektifikationskolonne (Kolonne 24) aufgegeben (Kopfdruck 295 mbar abs.; Kopftemperatur 53°C; theoretische Trennstufenzahl 4; Rücklaufkondensation bei 40°C).

Als Sumpfprodukt (25) wurde Abwasser mit folgender Reinheit erhalten:
2000 ppm Vinylacetat, 735 ppm Acetaldehyd, 32 ppm t-Butanol, 16 ppm Ethylacetat.

Nach Teilverdampfung hatte der Abwasserstrom (29) folgende Reinheit:
265 ppm Vinylacetat, 290 ppm Acetaldehyd, 18 ppm t-Butanol und 4 ppm Ethylacetat.

Am Kopf der Kolonne wurde ein Destillat (31/34) der folgenden Zusammensetzung erhalten 89 Gew.-% Vinylacetat, 7 Gew.-% Wasser, 0,9 Gew.-% Acetaldehyd, 120 ppm t-Butanol, 376 ppm Ethylacetat.

Es konnten mit dieser Verfahrensweise ca. 400 to Vinylacetatmonomer pro Jahr in Form des Destillats (31/34) zurückgewonnen werden.

### Beispiel 2 :

Es wurde analog Beispiel 1 vorgegangen, wobei das gemäß Beispiel 1 gewonnene Destillat in einer weiteren Rektifikationskolonne (Kolonne 42) aufgearbeitet wurde und dieser Kolonne auch Kondensate aus den Rohrleitungen der Anlage, dem Flüssigkeitsringverdichter und dem Abgaspufferbehälter aufgegeben wurden (Abwasserstrom 39: 86 Gew.-% Vinylacetat, 10,6 Gew.-% Wasser, 0,7 Gew.-% Acetaldehyd, 0,4 Gew.-% t-Butanol). Die Betriebsdaten dieser Rektifikationskolonne waren: Kopfdruck 300 mbar abs; Kopftemperatur 30°C; theoretische Trennstufenzahl 15; Rücklaufkondensation bei 20 °C

Das Sumpfprodukt der Kolonne (VAM) hatte folgende Zusammensetzung 99,4 Gew.-% Vinylacetat, 0,4 Gew.-% Wasser, 45 ppm Acetaldehyd, 980 ppm t-Butanol, 710 ppm Ethylacetat.

Mit dieser Verfahrensweise konnten zusätzlich zu den 400 to Vinylacetatmonomer pro Jahr gemäß Beispiel 1 weitere 250 to Vinylacetatmonomer zurückgewonnen werden.

Dies entspricht einer Einsparung von ca. 650000 € pro Jahr bei einer Anlagenkapazität von 100000 to Dispersion pro Jahr.

## Patentansprüche

1. Verfahren zur Aufbereitung von Abwässern und Abgaskondensaten aus der Polymerisation von Vinylacetat und Ethylen und gegebenenfalls weiteren Comonomeren in wässrigem Medium, nach dem Suspensions- oder Emulsionspolymerisationsverfahren bei einem Druck von 5 bis 100 bar abs., wobei nach Abschluss der Polymerisation der Polymerisationsansatz auf einen Druck von 0,1 bis 5 bar abs. entspannt wird, und gegebenenfalls mit inerten Schleppgasen behandelt wird und die Polymerdispersion abgelassen wird, **dadurch gekennzeichnet, dass**
A) während der Entspannung die gasförmige Phase mittels eines Verdichters (5) abgezogen wird,
B) gegebenenfalls die beim Strippen anfallende gasförmige Phase mittels des Verdichters (5) abgezogen wird und vor Eintritt in den Verdichter mittels eines oder mehrerer Wärmetauscher (8) abgekühlt wird, und
C) die im Verdichter (5) und gegebenenfalls im Wärmetauscher (8) anfallenden flüssigen Phasen (7,11) jeweils von der gasförmigen Phase abgetrennt werden, und
D) einer Rektifikationskolonne (24) aufgegeben werden, und in eine Vinylacetatmonomer-Phase (34/44) und eine Abwasserphase (25/29) aufgetrennt werden, und die Vinylacetatmonomer-Phase wieder der Polymerisation zugeführt wird.

2. Verfahren nach Anspruch 1, **dadurch gekennzeichnet, dass** die bei der Verdichtung anfallenden Kondensate und die beim Betrieb des Verdichters (5) anfallenden Abwässer sowie gegebenenfalls weitere Abwässer aus der Polymerisation, gesammelt werden und der Rektifikationskolonne (24) aufgegeben werden.

3. Verfahren nach Anspruch 1 oder 2, **dadurch gekennzeichnet, dass** am Kopf der Rektifikationskolonne (24) ein dampfförmiger Vinylacetatmonomer-Strom (31) abgezogen wird und auf eine Temperatur abgekühlt wird, bei der der Wasseranteil kondensiert, und der gasförmige Vinylacetatmonomer-Anteil (34) gegebenenfalls nach Kondensation, wieder der Polymerisation zugeführt wird oder zur Abgasverbrennung geführt wird.

4. Verfahren nach Anspruch 1 bis 3, **dadurch gekennzeichnet, dass** das gereinigte Abwasser als Sumpfprodukt (25) der Rektifikationskolonne (24) entnommen wird.

5. Verfahren nach Anspruch 1 bis 4, **dadurch gekennzeichnet, dass** der am Kopf der Rektifikationskolonne (24) abgezogene dampfförmige Vinylacetatmonomer-Strom (31) in einer weiteren Rektifikationskolonne (42) gereinigt wird.

6. Verfahren nach Anspruch 5, **dadurch gekennzeichnet, dass** der Rektifikationskolonne (42) weitere Abwässer (39) mit überwiegend organischen Bestandteilen zugeführt werden.

7. Verfahren nach Anspruch 1 bis 6, **dadurch gekennzeichnet, dass** das in der Rektifikationskolonne (24) als Sumpfprodukt (25) erhaltene Abwasser weiter gereinigt wird, und dazu in einem Verdampfer (27) teilweise verdampft wird und der nach Teilverdampfung verbleibende Abwasserstrom (29) ausgeschleust wird.

8. Verfahren nach Anspruch 1 bis 7, **dadurch gekennzeichnet, dass** die mit dem Verfahren erhaltenen Abwässer einen Reinheitsgrad von ≥ 99,0 Gew.-% Wasser aufweisen.

9. Verfahren nach Anspruch 1 bis 4, **dadurch gekennzeichnet, dass** das mit dem Verfahren erhaltene Vinylacetat-Monomer mit einem Reinheitsgrad von bis zu 98 Gew.-% Vinylacetatmonomer erhalten wird.

10. Verfahren nach Anspruch 5 oder 6, **dadurch gekennzeichnet, dass** das mit dem Verfahren erhaltene Vinylacetat-Monomer mit einem Reinheitsgrad von ≥ 99 % Vinylacetatmonomer erhalten wird.

## Claims

1. Method for processing wastewaters and waste-gas condensates from the polymerization of vinyl acetate and ethylene and optionally further comonomers in an aqueous medium, by the suspension or emulsion polymerization process under a pressure of 5 to 100 bar abs., in which, after the end of the polymerization, the polymerization batch is let down to a pressure of 0.1 to 5 bar abs., and is optionally treated with inert entraining gases and the polymer dispersion is drained off, **characterized in that**
A) during letdown the gaseous phase is taken off by means of a compressor (5),
B) the gaseous phase obtained during stripping is optionally taken off by means of the compressor (5) and, before entering the compressor, is cooled by means of one or more heat exchangers (8), and
C) the liquid phases (7,11) obtained in the compressor (5) and optionally in the heat exchanger (8) are each separated from the gaseous phase, and
D) are applied to a rectifying column (24), and are separated into a vinyl acetate monomer phase (34/44) and into a wastewater phase (25/29), and the vinyl acetate monomer phase is returned to the polymerization.

2. Method according to Claim 1, **characterized in that** the condensates obtained during compression and the wastewaters obtained during operation of the compressor (5), and also any further wastewaters from the polymerization, are collected and applied to the rectifying column (24).

3. Method according to Claim 1 or 2, **characterized in that** a vinyl acetate monomer stream (31) in vapor form is taken off at the top of the rectifying column (24) and is cooled to a temperature at which the water fraction condenses, and the gaseous vinyl acetate monomer fraction (34), optionally after condensation, is returned to the polymerization or passed to waste-gas incineration.

4. Method according to Claim 1 to 3, **characterized in that** the purified wastewater is taken as bottom product (25) from the rectifying column (24).

5. Method according to Claim 1 to 4, **characterized in that** the vinyl acetate monomer stream (31) in vapor form that is taken off at the top of the rectifying column (24) is purified in a further rectifying column (42).

6. Method according to Claim 5, **characterized in that** the rectifying column (42) is supplied with further wastewaters (39) having predominantly organic constituents.

7. Method according to Claim 1 to 6, **characterized in that** the wastewater obtained as bottom product (25) in the rectifying column (24) is purified further, and for that purpose is partially vaporized in a vaporizer (27), and the wastewater stream (29) which remains after partial vaporization is removed.

8. Method according to Claim 1 to 7, **characterized in that** the wastewaters obtained with the method have a purity of ≥ 99.0 wt% water.

9. Method according to Claim 1 to 4, **characterized in that** the vinyl acetate monomer obtained with the method is obtained with a purity of up to 98 wt% vinyl acetate monomer.

10. Method according to Claim 5 or 6, **characterized in that** the vinyl acetate monomer obtained with the method is obtained with a purity of ≥ 99% vinyl acetate monomer.

## Revendications

1. Procédé de conditionnement d'eaux résiduaires et de condensés de gaz d'échappement issus de la polymérisation d'acétate de vinyle et d'éthylène et éventuellement de comonomères supplémentaires dans un milieu aqueux, selon le procédé de polymérisation en suspension ou en émulsion à une pression de 5 à 100 bar abs., la préparation de polymérisation étant détendue après la fin de la polymérisation à une pression de 0,1 à 5 bar abs., et éventuellement traitée avec des gaz d'entraînement inertes et la dispersion de polymère étant déchargée, **caractérisé en ce que**
A) pendant la détente, la phase gazeuse est soutirée au moyen d'un compresseur (5),
B) la phase gazeuse formée lors de l'extraction est éventuellement soutirée au moyen du compresseur (5) et refroidie avant l'entrée dans le compresseur au moyen d'un ou de plusieurs échangeurs de chaleur (8), et
C) les phases liquides (7, 11) formées dans le compresseur (5) et éventuellement dans l'échangeur de chaleur (8) sont chacune séparées de la phase gazeuse, et
D) introduites dans une colonne de rectification (24), et séparées en une phase de monomère acétate de vinyle (34/44) et une phase d'eau résiduaire (25/29), et la phase de monomère acétate de vinyle est réintroduite dans la polymérisation.

2. Procédé selon la revendication 1, **caractérisé en ce que** les condensés formés lors de la compression et les eaux résiduaires formées lors de l'exploitation du compresseur (5), ainsi qu'éventuellement des eaux résiduaires supplémentaires issues de la polymérisation, sont rassemblés et introduits dans la colonne de rectification (24).

3. Procédé selon la revendication 1 ou 2, **caractérisé en ce qu'**un courant de monomère acétate de vinyle gazeux (31) est soutiré à la tête de la colonne de rectification (24) et refroidi à une température à laquelle la fraction d'eau est condensée, et la fraction de monomère acétate de vinyle gazeuse (34), éventuellement après condensation, est réintroduite dans la polymérisation ou est introduite dans la combustion du gaz d'échappement.

4. Procédé selon les revendications 1 à 3, **caractérisé en ce que** l'eau résiduaire purifiée est soutirée en tant que produit de fond (25) de la colonne de rectification (24).

5. Procédé selon les revendications 1 à 4, **caractérisé en ce que** le courant de monomère acétate de vinyle gazeux (31) soutiré à la tête de la colonne de rectification (24) est purifié dans une colonne de rectification supplémentaire (42).

6. Procédé selon la revendication 5, **caractérisé en ce que** des eaux résiduaires supplémentaires (39) contenant principalement des constituants organiques sont introduites dans la colonne de rectification (42).

7. Procédé selon les revendications 1 à 6, **caractérisé en ce que** l'eau résiduaire obtenue en tant que produit de fond (25) dans la colonne de rectification (24) est davantage purifiée, et est pour cela partiellement évaporée dans un évaporateur (27) et le courant d'eau résiduaire (29) restant après l'évaporation partielle est évacué.

8. Procédé selon les revendications 1 à 7, **caractérisé en ce que** les eaux résiduaires obtenues par le procédé présentent un degré de pureté ≥ 99,0 % en poids d'eau.

9. Procédé selon les revendications 1 à 4, **caractérisé en ce que** le monomère acétate de vinyle obtenu par le procédé est obtenu avec un degré de pureté de jusqu'à 98 % en poids de monomère acétate de vinyle.

10. Procédé selon la revendication 5 ou 6, **caractérisé en ce que** le monomère acétate de vinyle obtenu par le procédé est obtenu avec un degré de pureté ≥ 99 % de monomère acétate de vinyle.
